(19) Europäisches Patentamt
European Patent Office
Office européen des brevets

(11) **EP 2 266 908 A2**

(12) **EUROPÄISCHE PATENTANMELDUNG**

(43) Veröffentlichungstag:
**29.12.2010 Patentblatt 2010/52**

(51) Int Cl.:
***B65H 59/40*** *(2006.01)* ***B65H 61/00*** *(2006.01)*

(21) Anmeldenummer: **10006000.3**

(22) Anmeldetag: **10.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **23.06.2009 DE 102009030246**

(71) Anmelder: **Sentex Chemnitz GmbH**
**09112 Chemnitz (DE)**

(72) Erfinder: **Schäfer, Wolfgang**
**09127 Chemnitz (DE)**

(74) Vertreter: **Findeisen Hübner Neumann**
**Pornitzstraße 1**
**09112 Chemnitz (DE)**

Bemerkungen:
Ein Antrag gemäss Regel 139 EPÜ auf Berichtigung der Beschreibung und des Patentanspruchs nummer 1 liegt vor. Über diesen Antrag wird im Laufe des Verfahrens vor der Prüfungsabteilung eine Entscheidung getroffen (Richtlinien für die Prüfung im EPA, A-V, 3.).

(54) **Verfahren und Anordnung zur berührungslosen Bestimmung von Fadenzugkraft-Werten**

(57) Aufgabe der vorliegenden Erfindung ist es, ein Verfahren und eine Anordnung zur berührungslosen Bestimmung von Fadenzugkraft-Werten - insbesondere von Fadenzugkraft-Änderungen längs des Fadens, unter bestimmten Bedingungen auch der absoluten Zugkraft im Faden selbst - zu schaffen, wobei dieses Verfahren nicht mit den Nachteilen der anderen Verfahren behaftet sein soll und mit dem wirkliche Fadenzugkraft-Werte und nicht fehlerbehaftete Näherungswerte bestimmt werden.

Erfindungsgemäß wird die Aufgabe dadurch gelöst, dass

a) in einen Rechenmodul (4) gambezogene Werte sowie eine Rechenvorschrift zur Berechnung eines Fadenzugkraft-Wertes aus Messwerten, Sensorsignalen oder vorbestimmten Werten unter Verwendung dieser garnbezogenen Werte eingegeben werden, dass

b) als Messwerte, Sensorsignale oder vorbestimmte Werte Fadengeschwindigkeiten (v) von jeweils zwei benachbarten Abschnitten ($a_\mu$, $a_{\mu+1}$) und wahlweise die Fadenzugkraft im Fadenabschnitt ($a_\mu$) vor dem Fadenleitelement in den Rechenmodul (4) eingegeben werden, dass

c) im Rechenmodul (4) ein Fadenzugkraft-Wert für den Abschnitt ($a_{\mu+1}$) entsprechend der Rechenvorschrift berechnet wird, und dass

d) der Fadenzugkraft-Wert zahlenmäßig zur Anzeige gebracht oder in der Form eines Signals einer Weiterverarbeitung zugeführt wird.

Die Erfindung betrifft ein Verfahren zur berührungslosen Bestimmung von Fadenzugkraft-Werten im Sinne einer Messung oder sonstigen Quantifizierung von Fadenzugkraft-Änderungen, unter bestimmten Bedingungen auch des Wertes der absoluten Fadenzugkraft, zur Anwendung z.B. beim Schusseintrag an Webmaschinen, beim Naturfaserspinnen oder beim Rundstricken.

Fig. 1

EP 2 266 908 A2

**Beschreibung**

Die Erfindung betrifft ein Verfahren zur berührungslosen Bestimmung von Fadenzugkraft-Werten im Sinne einer Messung oder sonstigen Quantifizierung von Fadenzugkraft-Änderungen, unter bestimmten Bedingungen auch des Wertes der absoluten Fadenzugkraft, zur Anwendung z.B. beim Schusseintrag an Webmaschinen, beim Naturfaserspinnen oder beim Rundstricken.

Die Zugkraft im Faden, der aus einem Garn gebildet ist, üblicherweise (allerdings physikalisch nicht korrekt) auch als Fadenspannung bezeichnet, ist eine der wichtigsten Kenngrößen in textiltechnologischen Prozessen. Die Fadenzugkraft ist in erster Linie bestimmend für die Beanspruchung von Fäden und kennzeichnet in dieser Beziehung die Wahrscheinlichkeit dafür, wie oft ein Faden während des Prozessablaufs zerreißen (brechen) wird. Fadenbrüche haben immer zur Folge, dass der Prozess unterbrochen werden muss, um die entstandenen beiden, losen und oft wirr voneinander weg zurückgesprungenen, Faden-Enden wieder miteinander zu verbinden. Man spricht vom (Wieder-) Anknüpfen des Fadens. Das ist ein Zeit beanspruchender Ausfall im ansonsten kontinuierlichen Prozess. Anknüpfen (Anspinnen) ist in einigen Prozessen, vor allem beim Ringspinnen, sogar der hauptsächliche Bedienvorgang. Gelingt es, die Fadenbrüche zu reduzieren, folgt daraus eine wesentliche Erhöhung der Produktivität, indem in der gleichen Gesamtzeit mehr von dem entsprechenden Produkt (Garn oder das aus dem Garn gebildete Flächengebilde) hergestellt werden kann. In Flächenbildungsprozessen verursacht eine nicht konstante Fadenzugkraft Ungleichmäßigkeiten im Aussehen des Gewebes, Gestrickes oder Gewirkes. Es entsteht, zusätzlich neben den Fadenbrüchen, infolge einer nicht den Erfordernissen entsprechenden Fadenzugkraft, ein Produkt niedrigerer Qualität.

Fadenzugkraft-Messverfahren mit mindestens einer -gegenüber dem Zustand ohne Fadenzugkraft-Messeinrichtung - zusätzlichen Berührungsstelle gibt es in großer Vielfalt, beispielsweise DE 44 00 037 C2. Verbreitet und allgemein bekannt ist ein Verfahren nach dem Dreipunkte-Prinzip (Figur 7). Bei dieser Art Messgrößenaufnehmer wird der Faden, wie auch in DE 10 2005 038 047 B4, von zwei äußeren, feststehenden, Fadenleitelementen in seiner im Prozess erforderlichen Lage gehalten, während er in dem dazwischen liegenden Abschnitt lokal durch ein drittes, zusätzliches Fadenleitelement ausgelenkt wird, was (infolge teilweiser Umschlingung des Fadenleitelements, als sogenannte Umlenkstelle) eine Reaktionskraft in diesem Fadenleitelement zur Folge hat. Im nächsten Verfahrensschritt verformt die Reaktionskraft einen mit letzterem Fadenleitelement verbundenen Verformungskörper, vorstellbar als zielgerichtet gestaltete (elastische) Feder. Dessen Verformungszustand wird nach einem von verschiedensten bekannten Prinzipen in ein elektrisches Signal gewandelt, z.B. mittels auf den Verformungskörper aufgebrachter Dehnungsmess-Streifen oder nach DE 4 400 037 C2 mittels einer Magnetfeldsonde. Durch die Wandlung in ein elektrisches Signal ist nach gängiger Anschauung die betreffende Mess-Signalgewinnungseinheit insgesamt als "Sensor" zu bezeichnen, der Sensorteil vor der mechanisch-elektrischen Wandlung wird oft als Messgrößenaufnehmer bezeichnet.

Die beiden äußeren, feststehenden Fadenleitelemente können auch schon als üblicher Bestandteil im Fadenlauf, ggf. vom Mess-Ort weit entfernt und scheinbar verborgen, angeordnet, sein. Im üblichen Fadenlauf kann auch ein selbst als Umlenkstelle ausgebildetes Fadenleitelement (z.B. eine Rolle oder Walze) bereits vorhanden sein. Zum Zweck der Messung muss es dann auf einem Verformungskörper gelagert sein.

Der Hauptnachteil eines berührenden Verfahrens resultiert daraus, dass in den meisten Fällen im Fadenlauf eine verwertbare Umlenkstelle nicht vorhanden ist. Eine demgemäß zusätzlich eingebrachte Umlenkstelle (als Bestandteil eines Messgrößenaufnehmers) stört jedoch, durch deren Berührung mit dem Faden, den textiltechnologischen Prozess. Dies folgt vor allem daraus, dass zusätzliche Reibungskräfte oder Trägheitskräfte vonseiten des Messgrößenaufnehmers auf den Faden übertragen werden. Zum Beispiel beim Ringspinnen zerfällt der aus dem Streckwerk kommende, noch unfertige Faden bei jedweder Berührung durch einen Messgrößenaufnehmer in seine Einzelfasern. Beim Rundstricken verweigern die heute angewendeten geringsten Zugkräfte, in der Nähe von nur 1 cN, ebenso eine zusätzliche Berührungsstelle. Beim Schusseintrag in der Webmaschine ist der Schussfaden im Bereich der Webbreite a priori keinem bekannten Fadenzugkraft-Messverfahren mit Berührung zugänglich, weil beim Fachwechsel Kettfäden den Messgrößenaufnehmer durchdringen müssten.

Bekannt sind auch berührungslose Fadenzugkraft-Messverfahren. Als berührungslos wird hier ein Messverfahren bezeichnet, das nicht selbst Ursache einer zusätzlichen Berührung des Fadens, über die ohnehin durch den technologischen Prozess bedingten Berührungen mit Fadenleitelementen hinaus, ist. So ist seit längerem bekannt, Schwingungen auszuwerten, die der Faden im Bereich zwischen zwei den Fadenlauf bestimmenden Fadenleitelementen ausführt ("Verfahren der schwingenden Saite"). Die Frequenz der Schwingung ist mit der Zugkraft verknüpft wie etwa bei den Saiten in Musikinstrumenten (Gerät "Digiforce" der Firma Applied Measurements Limited/UK. (www.appmeas.co.uk) und "Die Technologie der schwingenden Saite" (www. sensormate. ch)). In EP 0 753 088 B1 ist dieses Verfahren auch für einen anderen Zweck angewendet worden, also nicht um die Fadenzugkraft zu bestimmen, sondern um im Texturierprozess die Qualität der Verwirbelung zu bewerten. Der Hauptnachteil dieses Verfahrens, gleichgültig in welcher Anwendung, besteht darin, dass die genannten zwei Fadenleitelemente als Klemmstellen den Faden quer zu seiner Durchlaufrichtung exakt fixieren müssen, um zu gewährleisten, dass er mindestens dort noch keinerlei Querschwingung ausführen kann. Vor allem Letzteres lässt sich z.B. in der Ringspinnmaschine oder im Webfach schwerlich verwirklichen. Nachteilig ist ferner die nicht ausreichende Messdynamik, weil ein Einschwingvorgang unvermeidlich ist.

In EP 1 473 390 A2 wird ein Verfahren zur Überwachung des Fadentransports in einer Webmaschine vorgeschlagen, mit welchem eine Zugkraftmessung tatsächlich berührungslos, also ohne zusätzliche Umlenkstellen oder Klemmstellen, erfolgen könnte. Das Verfahren beruht darauf, den Faden in aneinander gereihte Finite Elemente (Fadenpunkte oder -abschnitte) einzuteilen, an denen Eingangs- und Ausgangsgrößen wirken oder festgestellt werden, so dass die Fortpflanzung der Größen über die entstehende Vielzahl der Finiten Elemente hinweg verfolgt werden kann. Dazu muss für die Elemente ein Rechenmodell als Simulationsmodell in der Art und Weise der Methode der Finiten Elemente (FEM) erstellt werden. Das Simulationsmodell enthält Modellparameter, die aus Berechnungen oder Versuchen erst gewonnen werden müssen und wobei in einer Vorzugsvariante die festgestellten Werte der Größen zur iterativen Anpassung der Modellparameter verwendet werden. Als eine der Größen kann die Geschwindigkeit am Element berührungslos, beispielsweise mittels Ortsfiltermethode mit elektrostatischer Signalerzeugung gemäß DE 19 900 581 A1 erfasst werden, um daraus mittels des Rechenmodells in Verbindung mit anderen gemessenen Größen berührungslos auf die Fadenzugkraft zu schließen. Es ist dargelegt, dass der Faden beispielsweise als eindimensionaler Kontinuumsschwinger oder als Kontinuumskette modelliert wird. Als Modellparameter sind offenbart die

Masse m, eine Elastizitätskonstante k, eine Dämpfung c. Als Größen finden Verwendung neben Geschwindigkeit und (innerer) Fadenzugkraft auch die am Faden wirkenden (äußeren) Antriebs- oder Bremskräfte. Analytische Zusammenhänge zwischen den Größen, die zur Berechnung erforderlich wären, insbesondere etwa konkrete Rechenvorschriften, werden nicht dargestellt. Das Verfahren hat insbesondere den Nachteil, dass es offensichtlich äußerst schwierig und aufwändig wäre, das Modell mit den notwendigen, der Mathematik bzw. Berechnung zugänglichen, Beziehungen zwischen der Vielzahl der eingehenden Größen aufzustellen. Die Kompliziertheit resultiert vor allem aus der Vielzahl der zu kombinierenden Parameter. Ein Beispiel für eine praktisch durchführbare Realisierung ist nicht bekannt geworden. In der genannten Schrift ist auch nicht etwa ein Hinweis darauf enthalten, dass die Fadenzugkraft anders als unter Zuhilfenahme des FEM-Modells berechnet werden könnte. Mittels des angeführten Rechenmodells sollen außerdem a priori nur Näherungswerte, u.a. der Fadenzugkraft, berechnet werden. Das Verfahren legt außerdem eine iterative Anpassung der Modellparameter nahe, was die Verhältnisse noch weiter verkompliziert. Die Verwendung eines Rechenmodells oder FEM-Modells an sich, ohne dessen nähere Kennzeichnung, ist andererseits eine allgemein bekannte Methode.

Weitere berührungslose Messverfahren tangieren zwar die Fadenzugkraft-Messung, ohne jedoch tatsächlich die erforderlichen Zugkraftwerte bestimmbar zu machen. So offenbart EP 1 953 282 A1 ein Verfahren und eine Vorrichtung, um beim Schusseintrag in der Webmaschine berührungslos ein Geschwindigkeitsprofil längs des eingetragenen Schussfadens zu erstellen. Die Messung erfolgt mittels spezieller berührungsloser Messgrößenaufnehmer nach einem Laser-Interferenzverfahren, Laser-Doppler-Verfahren, Ortsfilterverfahren (Ortsfiltermethode) oder Korrelationsverfahren. Allein der Verweis auf daraus bestimmbare weitere, mit der Geschwindigkeit verknüpfte, Größen ist dabei noch kein Hinweis auf eine etwaige Möglichkeit der berührungslosen Bestimmung von Fadenzugkraft-Werten. Die Fadengeschwindigkeit selbst lässt aber noch nicht die eigentlich erforderliche Bewertung zu. Insbesondere sind die Neigung zu Fadenbrüchen und die Qualität eines Flächengebildes direkt von der Fadenzugkraft abhängig. In der Webmaschine wird, vor allem bei elastischen Garnen, die so genannte Einarbeitung des Schussfadens unmittelbar von der Fadenzugkraft bestimmt und nur mittelbar von der Fadengeschwindigkeit, ohne dass im Stand der Technik der physikalische Zusammenhang zwischen beiden bekannt geworden ist. EP 1 953 282 A1 stellt somit kein Verfahren zur Bestimmung von Fadenzugkraftwerten dar.

Einzuhalten sind aber im textiltechnologischen Prozess die Toleranzen der Fadenzugkraft selbst, was sich durch Betrachtung von lediglich Geschwindigkeitswerten, jedenfalls nach dem bisherigen Stand der Technik und damit entsprechend einem Nachteil auch des zuletzt beschriebenen Messverfahrens, nicht gewährleisten lässt.

Mit einem Verfahren nach WO/2008/012 093 ist mittels Laser-Doppler-Anemometrie die Geschwindigkeit des Fadens an einem begrenzten Fadenstück bestimmbar. Zwar bietet hier im Weiteren die aus zeitlichen Geschwindigkeits-Änderungen hergeleitete Beschleunigung einen Anhaltspunkt bezüglich der Zugkraftbeanspruchung des Fadens und bezüglich Fadenzugkraft-Spitzen, wenn auch jeweils eingeschränkt auf nur ein bestimmtes Stück des Fadenlaufs. Die Bestimmung der Fadenzugkraft an sich, allein aus der Beschleunigung, ist jedoch auch für dieses Fadenstück trotzdem nicht möglich. Lediglich eine Komponente der Fadenzugkraft bzw. Beanspruchung könnte sich über die Massenkraft im Faden bestimmen lassen. Der vermutlich komplizierte Zusammenhang ist nicht offenbart. Insbesondere sind dabei aber auch schon die auf den Faden wirkenden Reibungskräfte und weitere Komponenten nicht berücksichtigt. Im Umkehrschluss hätte nämlich bei gleichförmiger Bewegung des Fadens, also bei fehlender Beschleunigung, die Fadenzugkraft immer den Wert 0, was der Erfahrung widerspricht. Das beschriebene Verfahren ist somit ebenfalls kein Verfahren zur Bestimmung von Werten bezüglich der wirklichen Zugkraft im Faden, nicht einmal an einem begrenzten Fadenstück.

Aufgabe der vorliegenden Erfindung ist es, ein Verfahren und eine Anordnung zur berührungslosen Bestimmung von Fadenzugkraft-Werten - insbesondere von Fadenzugkraft-Änderungen längs des Fadens, unter bestimmten Bedingungen auch der absoluten Zugkraft im Faden selbst - zu schaffen, wobei dieses Verfahren nicht mit den Nachteilen der anderen Verfahren behaftet sein soll und mit dem wirkliche Fadenzugkraft-Werte und nicht fehlerbehaftete Näherungswerte bestimmt werden.

Erfindungsgemäß wird die Aufgabe durch die Merkmale der Nebenansprüche gelöst. Ausgestaltungen der Erfindung sind in den Unteransprüchen dargestellt.

Der aus der Erfindung resultierende Vorteil besteht darin, durch Vermeidung einer zusätzlichen Fadenbeanspruchung infolge Fadenberührung, insbesondere weil eine exakte Führung des Fadens nicht einmal an der Stelle der Fadenleitelemente erforderlich ist, sowie auch wegen der Einfachheit des Verfahrens, die Anwendbarkeit der Zugkraftbestimmung auch in solchen textiltechnologischen Prozessen zu erreichen, wo das bisher nicht möglich war. Indem wirkliche Fadenzugkraft-Werte und nicht stark fehlerbehaftete Näherungswerte, durch eine klare Rechenvorschrift mit nur wenigen Parametern, bestimmbar sind, sind damit zugleich realistische Voraussetzungen zur Prüfung auf Einhaltung von Toleranzen oder Vorgaben sowie auch zur Bestimmung oder Erkennung von Fadenzugkraft-Spitzen geschaffen.

Die Erfindung wird nachfolgend anhand von Zeichnungen und in vereinfachter Weise durch Ausführungsbeispiele näher erläutert. Dabei zeigen:

Fig. 1:    das Grundprinzip der Bestimmung von Fadenzugkraft-Werten,

Fig. 2:    das Blockschaltbild einer Anordnung zur Bestimmung eines Fadenzugkraft-Profils längs des Fadens,

Fig. 3:    das Blockschaltbild einer Anordnung zur berührungslosen Bestimmung der absoluten Fadenzugkraft in einem Abschnitt $a_1$ des Fadens,

Fig. 4:    schematisch Teile einer Luftdüsenwebmaschine mit Anordnung zur Bestimmung von Fadenzugkraft-Werten oder eines Fadenzugkraft-Profils,

Fig.5    schematisch Teile einer Ringspinnmaschine mit Anordnung zur Bestimmung von Fadenzugkraft-Werten,

Fig.6:    schematisch Teile einer Rundstrickmaschine mit Anordnung zur Bestimmung von Fadenzugkraft-Werten und

Fig. 7:    eine allgemein bekannte Anordnung zur berührenden Fadenzugkraftmessung.

Der wesentliche Erfindungsgedanke besteht darin, über einen klar definierten physikalischen Zusammenhang gemäß einer Rechenvorschrift aus den Werten der Fadengeschwindigkeit auf mindestens zwei Abschnitten auf dem Faden, von denen mindestens ein Wert berührungslos gemessenen wurde, berührungslos auf wirkliche Fadenzugkraft-Werte im Faden zu schließen (indirekte Messung, vollständig im Sinne von DIN 1319: Messtechnik, Begriffe).

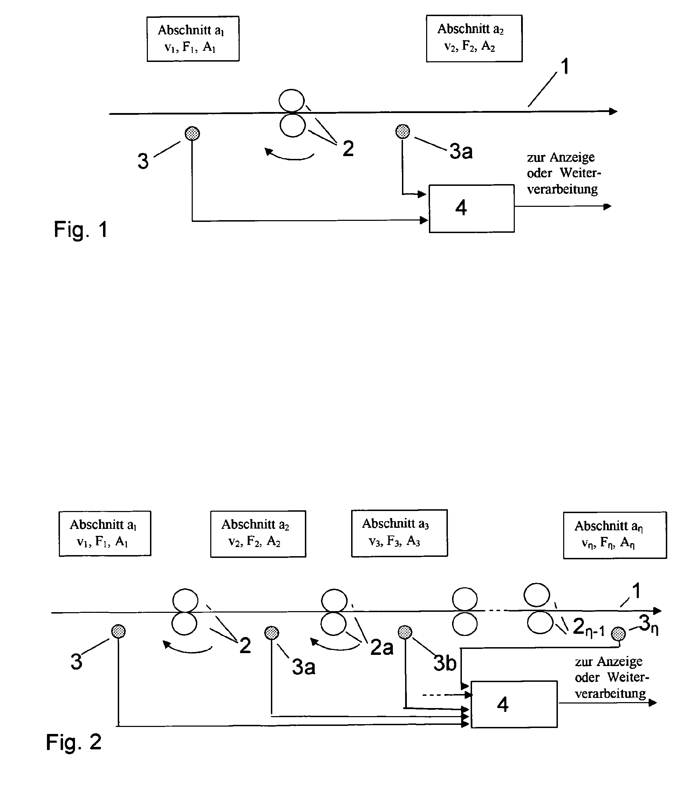

In Figur 1 ist das Grundprinzip des erfindungsgemäßen Verfahrens in Verbindung mit der erfindungsgemäßen Anordnung dargestellt. Ein Faden 1 wird durch ein Fadenleitelement 2 geführt, welches den Faden 1 in zwei benachbarte Abschnitte, in Abschnitt $a_1$ und Abschnitt $a_2$ unterteilt, welches somit zugleich jeden Abschnitt (hier zunächst einseitig) begrenzt. In Fadenlaufrichtung sind vor und nach dem Fadenleitelement 2 je ein Geschwindigkeitssensor 3 und 3a angeordnet, der, bezogen auf den jeweiligen Abschnitt, die Geschwindigkeit $v_1$ oder $v_2$ des Fadens 1 misst. Mindestens der Geschwindigkeitssensor 3a misst die Geschwindigkeit berührungslos.

Die Messwerte oder Sensorsignale für die Fadengeschwindigkeit werden einem Rechenmodul 4 zugeführt bzw. in den Rechenmodul eingegeben, in welchem weitere, insbesondere garnbezogene Werte wie Elastizitätsmodul E und Fadenquerschnitt $A_0$, sowie eine Rechenvorschrift bereits eingegeben und gespeichert sind oder dort eingegeben und gespeichert werden. Dabei ist dieser Rechenmodul 4 nicht zu verwechseln mit einem Rechenmodell. Ein Rechenmodul ist eine Einrichtung, die nach einer bereits vorgegebenen Rechenvorschrift eine Rechnung ausführt. Ein Rechenmodell ist dagegen, wie in dem im Stand der Technik beschriebenen Fall von EP 1 473 390 A2, immateriell und lediglich dafür geeignet, die Art und Weise einer vorgesehenen Berechnung, beispielsweise mittels einer noch daraus abzuleitenden Rechenvorschrift, überhaupt erst vorzugeben.

Das erfindungsgemäße Verfahren arbeitet also derart, dass

a) in den Rechenmodul 4 garnbezogene Werte sowie eine Rechenvorschrift zur Berechnung eines Fadenzugkraft-Wertes aus Messwerten, Sensorsignalen oder vorbestimmten Werten unter Verwendung dieser garnbezogenen Werte eingegeben werden, dass

b) als Messwerte, Sensorsignale oder vorbestimmte Werte Fadengeschwindigkeiten v von jeweils zwei benachbarten Abschnitten $a_\mu$, $a_{\mu+1}$ und wahlweise die Fadenzugkraft im Fadenabschnitt $a_\mu$ vor dem Fadenleitelement in den Rechenmodul 4 eingegeben werden, dass

c) im Rechenmodul 4 ein Fadenzugkraft-Wert für den Abschnitt $a_{\mu+1}$ entsprechend der Rechenvorschrift berechnet wird, und dass

d) der Fadenzugkraft-Wert zahlenmäßig zur Anzeige gebracht oder in der Form eines Signals einer Weiterverarbeitung zugeführt wird. Dabei ist es vorteilhaft, wenn die Fadengeschwindigkeit v zweier benachbarter Abschnitte $a_\mu$,$a_{\mu+1}$ in mindestens einem Abschnitt berührungslos messtechnisch erfasst wird und als garnbezogene Werte der Elastizitätsmodul E des Garnes und der Gamquerschnitt $A_0$ ausgewählt werden. Als Fadenzugkraft-Wert kann ein Fadenzugkraft- Verhältnis $F_{\mu+1} / F_\mu$ oder dessen Kehrwert berechnet werden.

Dabei sind:

$\mu$       Index, zum Abschnitt $a_\mu$ vor dem Fadenleitelement gehörig

$\mu+1$      Index, zum Abschnitt $a_{\mu+1}$ nach dem Fadenleitelement gehörig.

Erfindungsgemäß wurde folgender klar definierte physikalische Zusammenhang gefunden: In zwei Abschnitten $a_1$, $a_2$ ein und desselben Fadens können nach dem Kontinuitätsgesetz,

$$A \cdot v = \text{konstant,}$$

unterschiedliche Geschwindigkeiten $v_1, v_2$ (und somit unterschiedliche Kräfte $F_1, F_2$) nur dann vorliegen, wenn sich der Garnquerschnitt A verändert hat. Falls zum Beispiel wegen unterschiedlicher Kräfte $F_2 > F_1$ und der damit verbundenen Dehnung bzw. Querkontraktion die Relation der Querschnitte $A_2 < A_1$ ist, muss nach dem Kontinuitätsgesetz $v_2 > v_1$ sein. Somit lässt sich umgekehrt von den Geschwindigkeiten auf die Kräfte schließen, sobald der Zusammenhang zwischen Kraft und Gamquerschnitt bekannt ist.

Bekannt ist eine Differenzialgleichung der Form

$$T_1 \cdot \frac{d}{dt} F + F = \frac{v_0}{v} (F_0 - EA_0) + EA_0$$

[Backmann, R. Modellierung der Förderung elastischer Stoffe, in Verarbeitungsmaschinen Dissertation (Habilitationsschrift) Technische Hochschule Karl-Marx-Stadt (jetzt TU Chemnitz) genehmigt am 16. Januar 1981, Seite 12, Gleichung 3.4], die angibt, wie eine Fadenzugkraft "F nach einem Fadenleitelement" von der Fadenzugkraft "$F_0$ vor dem oder im Fadenleitelement" und gleichzeitig von den zugehörigen Geschwindigkeiten v und $v_0$ abhängen. Die Fadenzugkraft hängt außerdem von den bereits genannten Kennwerten des Garnes, aus dem der Faden besteht, ab. $A_0$ ist der Garnquerschnitt im unbelasteten (kraftfreien) Zustand und E der Elastizitätsmodul (Zugmodul in $N/mm^2$) des Garnes.

Es wurde gefunden, dass diese Gleichung bei der berührungslosen Fadenzugkraft-Messung genutzt werden kann.

Für den statischen Fall der Fadenbewegung (F, $F_0$ konstant) konnte erfindungsgemäß im hier verfolgten Zweck der Fadenzugkraft-Messung diese Gleichung zu einer einfacheren Berechnungsformel in der Form

$$F_{\mu+1} = \frac{v_\mu}{v_{\mu+1}} (F_\mu - EA_0) + EA_0 \qquad\qquad \text{(I)}$$

oder

$$F_{\mu+1} = \frac{v_\mu}{v_{\mu+1}} F_\mu + EA_0 \left(1 - \frac{v_\mu}{v_{\mu+1}}\right) \qquad\qquad \text{(II)}$$

abgewandelt werden.

F ist fortan die Fadenzugkraft allgemein, $F_1$ ... bis $F_\eta$ ist die Fadenzugkraft im Abschnitt entsprechend Index. Die Fadengeschwindigkeit allgemein ist fortan v; $v_1$ ... bis $v_\eta$ ist die Geschwindigkeit im Abschnitt entsprechend Index.

Gleichung (II) ist die hauptsächliche erfindungsgemäße Rechenvorschrift, und vorzugsweise diese ist nach deren Eingabe im Rechenmodul 4 gespeichert.

Wenn die Fadenzugkraft $F_\mu$ vor einem der Fadenleitelemente 2, 2a ...$2_{\eta-1}$ gegeben oder anderweitig bekannt und im Rechenmodul 4 bereits eingegeben und gespeichert ist oder dort eingegeben und gespeichert wird, wird als Fadenzugkraft-Wert die absolute Fadenzugkraft $F_{\mu+1}$ nach dem entsprechenden Fadenleitelement 2 oder 2a ... $2_{\eta-1}$ berechnet.

Ist die Fadengeschwindigkeit $v_\mu$ vor einem der Fadenleitelemente 2, 2a ... $2_{\eta-1}$ gegeben oder anderweitig bekannt, wird sie im Rechenmodul 4 eingegeben und gespeichert. Fadenzugkraft-Änderungen, von $F_\mu$ zu $F_{\mu+1}$, sind auf die vorstehend beschriebene Weise sehr einfach erfassbar und somit messbar.

In den Figuren 1, 2, 3, 5 und 6 sind z.B. die Fadenleitelemente schematisch als Lieferwerk mit sich in Pfeilrichtung drehenden Walzen oder Rollen dargestellt.

Wenn in Fig. 1 als Fadenabschnitt $a_1$ im besonderen die Stelle definiert sein soll , an der der Faden 1, vor Verlassen des Fadenleitelementes 2 (Walzenpaar), noch die Umfangsgeschwindigkeit $v_1$ der Walzen aufweist, dann ist somit $v_1$ bekannt. (Zugkraft und Geschwindigkeit vor dem Fadenleitelement bleiben in der Regel auch innerhalb des Fadenleitelementes bestehen und verändern sich erst kurz vor dem Austritt aus dem Fadenleitelement, auf Werte entsprechend den Bedingungen im darauf folgenden Fadenabschnitt.)

Unter der besonderen Bedingung, dass der Absolutwert der Fadenzugkraft $F_\mu = F_1$ für den Fadenabschnitt $a_1$ ebenfalls bekannt ist, zum Beispiel durch Voreinstellung an einer Fadenzuführeinrichtung, und wenn $v_2$ mittels des Sensors 3a berührungslos gemessen wird, kann mittels Gleichung (II) aus den Werten der Fadengeschwindigkeiten in den beiden Abschnitten $a_1$ und $a_2$, nämlich $v_\mu = v_1$ sowie $v_{\mu+1} = v_2$, als Fadenzugkraft-Wert der Absolutwert $F_{\mu+1} = F_2$ der Fadenzugkraft im Fadenabschnitt $a_2$ sogar direkt berechnet und somit dort berührungslos exakt bestimmt werden.

Durch Umstellen der Gleichungen (I) oder (II), wahlweise auch mittels darauf aufbauender rein numerischer Rechnung, lässt sich zumindest das Verhältnis der Fadenzugkräfte $F_2$ und $F_1$, als Relativwert der Fadenzugkraft, berechnen, auch wenn die Fadenzugkraft $F_1$ selbst nicht bekannt ist. Ein solcher Relativwert stellt eine weitere erfindungsgemäße Option der im Rechenmodul 4 eingegebenen und dort gespeicherten Rechenvorschrift dar.

Sofern gemäß Figur 1 beide Geschwindigkeitssensoren berührungslos messen ist der entsprechende Fadenzugkraft-Wert vollkommen berührungslos bestimmbar. Falls der Geschwindigkeitswert $v_1$ und/oder die Fadenzugkraft $F_1$ nicht berührungslos gemessen werden, wird dennoch die Fadenzugkraft $F_2$ als absoluter Wert oder als Fadenzugkraft-Wert zumindest das Fadenzugkraft-Verhältnis $F_2/F_1$, oder dessen Kehrwert, jedenfalls bezogen auf Abschnitt $a_1$, berechnet und ist somit berührungslos bestimmbar.

Das Verfahren schließt die weitere Möglichkeit ein, Geschwindigkeit $v_2$ und Fadenzugkraft $F_2$ im Abschnitt $a_2$ einmalig mit einem berührenden Verfahren zu messen und daraus eine neue, einfache Beziehung zwischen Kraft und Geschwindigkeit zu gewinnen. Die genannte einfache Beziehung ist die geläufige Näherungsgleichung

$$F + \Delta F \qquad = \qquad F + dF/dv \bullet \Delta v$$

zwecks Berechnung der neuen Kraft $F+\Delta F$ bei einer neuen, jetzt berührungslos gemessenen Geschwindigkeit $v+ \Delta v$. Der Wert $dF/dv$ ergibt sich als Differenzialquotient aus Gleichung (II) und durch Einsetzen aller bekannten Werte ($F_1$, $F_2$, $v_1$ und $v_2$, E und $A_0$). Der Fadenzugkraft-Unterschied $\Delta F$ (=die Zugkraftdifferenz oder die Zugkraft-Änderung) ist eine weitere erfindungsgemäße Option eines Fadenzugkraft-Wertes, d.h., dass mittels des Rechenmoduls 4 als Fadenzugkraft-Wert der Zugkraftunterschied $\Delta F$ zu einem bereits vorher bestimmten Fadenzugkraft-Wert bestimmt werden kann.

In Figur 2 ist schematisch eine Anordnung dargestellt, mit der sich ein Profil der Fadenzugkraft längs des Fadens bestimmen lässt. Wenn wie in Figur 1 mittels der Geschwindigkeitssensoren 3 und 3a der Wert der Fadenzugkraft $F_2$ in dem an das Fadenleitelement 2a angrenzenden Abschnitt $a_2$ absolut oder relativ zu $F_1$ bestimmt werden kann, dann ist es auch, mittels der Geschwindigkeitssensoren 3a und 3b oder allgemein $3_{\eta-1}$ und $3_\eta$, möglich, die Fadenzugkraft $F_3$ (allgemein $F_\eta$) im an das Fadenleitelement 2a (allg. $2_{\eta-1}$) angrenzenden Abschnitt $a_3$ (allg. Abschnitt $a_\eta$) auf die gleiche Weise zu bestimmen. Dies stellt ein iteratives Vorgehen, durch zyklisches Weiterrücken immer von einem Fadenleitelement 2 usw. zum nächsten, dar und kann auf eine beliebige Anzahl von Fadenleitelementen bzw. Fadenabschnitten erweitert werden. Die Fadenzugkräfte $F_2$, $F_3$ .... $F_\eta$ sind auf diese Weise absolut oder zumindest relativ zur Fadenzugkraft $F_1$ berechenbar. Die Zahlenfolge dieser Fadenzugkraft-Werte ist erfindungsgemäß als Profil grafisch darstellbar. Durch zyklisches Weiterrücken der an ein Fadenleitelement 2, 2a ...$2_{\eta-1}$ angrenzenden beiden Abschnitte $a_\mu, a_{\mu+1}$ des Fadens 1, jeweils von einem Fadenleitelement 2, 2a ...$2_{\eta-1}$ zum nächsten, ist mittels iterativer Berechnung eine Folge von Fadenzugkraft-Werten $F_1$... bis $F_\eta$ berechenbar, die wahlweise auch als Fadenzugkraft-Profil grafisch darstellbar ist.

In einer einfachen, nicht getrennt dargestellten Anordnung sind jeweils die beiden einem Fadenleitelement benachbarten Sensoren, zum Beispiel die Geschwindigkeitssensoren 3a und 3b zum Fadenleitelement 2a sowie auch, betrachtet an Figur 2, beispielsweise die Geschwindigkeitssensoren $3_{\eta-1}$ und $3_\eta$ zum Fadenleitelement $2_{\eta-1}$ mit jeweils einem getrennten Rechenmodul 4a bzw. $4_\eta$ in der Art nach Figur 1 verbunden.

Gemäß Figur 2 sind dagegen alle Geschwindigkeitssensoren 3, 3a....$3_\eta$ mit ein und demselben Rechenmodul 4 verbunden, wobei mit letzterem die Fadenzugkraft-Werte aller Fadenabschnitte $a_2$ bis $a_\eta$ in diesem einen Rechenmodul 4 berechnet werden.

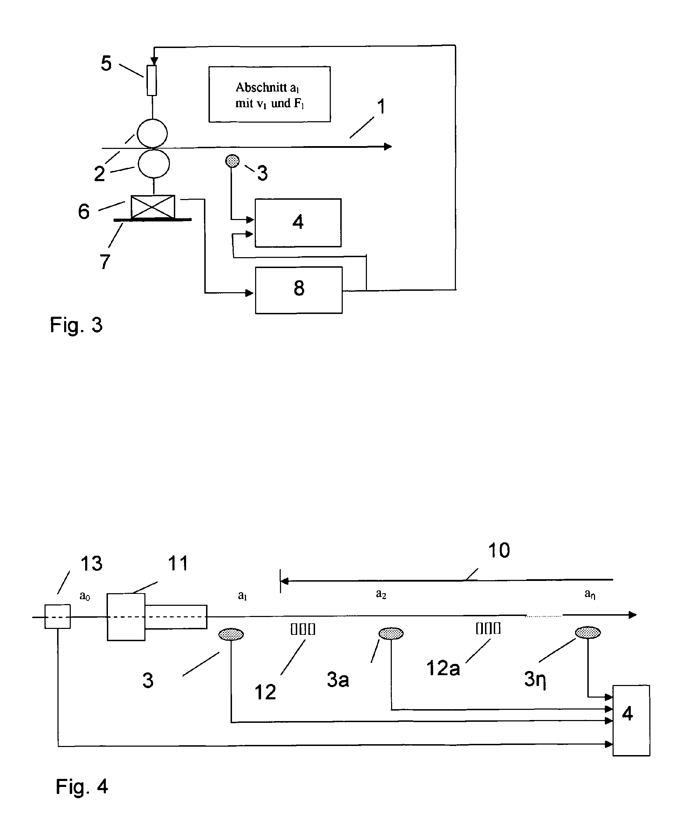

Figur 3 zeigt eine Anordnung zur berührungslosen Bestimmung der absoluten Fadenzugkraft $F_1$ im Fadenabschnitt $a_1$. Das Fadenleitelement 2 ist als regelbares Lieferwerk mit einer oberen und einer unteren Walze ausgeführt, durch welches der Faden 1 mit der einstellbaren, also bekannten, Geschwindigkeit $v_0$ angetrieben wird. Das Fadenleitelement 2 definiert somit den Fadenabschnitt $a_0$ (in der Zeichnung nicht mit einem Bezugszeichen versehen) als die Stelle, an der der Faden 1 infolge der Haftreibung die Umfangsgeschwindigkeit der Walzen, eben $v_0$, angenommen hat. Der Faden 1 wird durch eine nicht dargestellte nachfolgende Wirkpaarung der Textilmaschine abgezogen und weist deshalb im Abschnitt $a_1$ eine andere Geschwindigkeit $v_1$ auf als $v_0$ im Lieferwerk. Ein Elektromagnet 5 ist mit der oberen Walze verbunden, so dass infolge der Magnetkraft die obere Walze des Walzenpaares 2 eine Andruckkraft auf den Faden 1 ausübt, die sich über die untere Walze auf einen mit ihr verbundenen Druckkraftsensor 6 fortpflanzt. Letzterer wird auf einem festen Untergrund 7 in seiner Lage fixiert. Der Druckkraftsensor 6 ist mit seinem Ausgang an einen Regler 8 angeschlossen, der seinerseits druckkraftabhängig den Elektromagneten 5 mit Strom speist.

Wie unten auch noch weiter erläutert wird, ist bei der erfindungsgemäßen Anordnung zur berührungslosen Bestimmung von Fadenzugkraft-Werten unter Verwendung von Fadenleitelementen in Laufrichtung eines Fadens 1 mindestens vor dem oder im ersten Fadenleitelement 2 ein mit dem Rechenmodul 4 verbundener Fadenzugkraft-Sensor $3_0$ oder ein mit dem Rechenmodul 4 verbundenes kombiniertes Fadenzugkraft- und Geschwindigkeitsmessgerät 13 oder ein die Fadenzugkraft vorbestimmendes Funktionselement wahlweise angeordnet. Mindestens nach einem Fadenleitelement 2, 2a ...$2_{\eta-1}$ in der Nähe des Fadens 1 ist je ein Geschwindigkeitssensor 3, 3a...$3_\eta$ zur berührungslosen messtechnischen Erfassung der Fadengeschwindigkeit $v_\mu$, $v_{\mu+1}$ angeordnet. Jeder vorhandene Geschwindigkeitssensor 3, 3a...$3_\eta$ ist mit dem Rechenmodul 4 verbunden.

So ist es wie im Ausführungsbeispiel Figur 3 auch möglich, dass in Laufrichtung eines Fadens 1 lediglich mindestens nach einem Fadenleitelement 2, 2a ...$2_{\eta-1}$ in der Nähe des Fadens 1 je ein Geschwindigkeitssensor 3, 3a... $3_\eta$ zur berührungslosen messtechnischen Erfassung der Fadengeschwindigkeit $v_\mu$, $v_{\mu+1}$ angeordnet ist und dass jeder vorhandene Geschwindigkeitssensor 3, 3a... $3_\eta$ mit dem Rechenmodul 4 verbunden ist.

Im Rechenmodul 4 sind dabei die Rechenvorschrift Gleichung (II), die eingestellte und damit bekannte Geschwindigkeit $v_0$ sowie die Garnwerte $A_0$ und E bereits gespeichert. Die Kraft $F_0$ ist die im Lieferwerk als Reibungskraft auf den Faden wirkende Kraft, die sich aus der Andruckkraft ergibt und die somit durch den Regler 8 eingestellt, also vorbestimmt, werden kann, so dass sie bekannt ist. Das Ausgangssignal des Reglers 8, welches zu dieser Kraft $F_0$ proportional ist, wird demgemäß gleichzeitig dem Rechenmodul 4 zwecks Speicherung dort und Einbeziehung in dessen Rechnung (unter Berücksichtigung des Proportionalitätsfaktors zwischen Signalwert und Kraft $F_0$) zugeführt. Dem Rechenmodul 4 wird schließlich noch das Signal vom berührungslosen Geschwindigkeitssensor 3 zugeführt, so dass der Rechenmodul 4 somit über alle Voraussetzungen verfügt, die Berechnung des absoluten Wertes der Fadenzugkraft $F_1$ im Abschnitt $a_1$ vorzunehmen.

Figur 4 zeigt schematisch die Bestimmung von Fadenzugkraft-Werten beim Schusseintrag in eine Luftdüsenwebmaschine. Der Faden 1 bewegt sich beim Eintrag in den Bereich des Webfachs 10 an den Geschwindigkeitssensoren 3, 3a bis allgemein $3_\eta$ sowie an Stafettendüsen 12, 12a (nicht dargestellt: allgemein $12_{\eta-1}$) vorbei. Die Stafettendüsen 12 und 12a usw. wirken als Fadenleitelemente 2, 2a (allgemein $2_\eta$) analog Figur 2. Sie begrenzen am Faden 1 Abschnitte $a_1$, $a_2$ und allgemein $a_\eta$. Infolge des Angreifens von Kräften am Faden 1, vermittels des durch die jeweilige Stafettendüse 12, 12a usw. an den Faden gelenkten Luftstroms, kann sich die im Faden wirkende Fadenzugkraft von einem Abschnitt zum anderen ändern. Die Geschwindigkeitssensoren 3, 3a bis allgemein $3_\eta$ können vorzugsweise nach DE 199 00 581 B4 bzw. nach der Ortsfiltermethode ausgestaltet sein. Indem die Geschwindigkeitssensoren 3, 3a und $3_\eta$ mit dem Rechenmodul 4 verbunden sind, lässt sich, soweit die garnbezogenen Werte E und $A_0$ bereits im Rechenmodul 4 gespeichert sind, vermittels der gleichfalls gespeicherten Rechenvorschrift (II) beispielsweise aus den Signalen der Geschwindigkeitssensoren 3 und 3a das Verhältnis der Fadenzugkraft $F_2$ im Abschnitt $a_2$ zur Fadenzugkraft $F_1$ im Abschnitt $a_1$ bestimmen. Ebenso lässt sich beispielsweise aus den Signalen der Geschwindigkeitssensoren 3 und $3_\eta$ das Verhältnis der Fadenzugkraft $F_\eta$ im Abschnitt $a_\eta$ zur Fadenzugkraft $F_1$ im Abschnitt $a_1$ bestimmen.

Bei der Verwendung der Anordnung in einer Luftdüsenwebmaschine zur Bestimmung von Fadenzugkraft-Werten oder eines Fadenzugkraft-Profils an dem in einem Bereich 10 des Webfachs eingetragenen Faden 1, sind innerhalb der Webbreite die Fadenleitelemente 2, 2a ... $2_{\eta-1}$) vorteilhafterweise als Stafettendüsen 12, 12a ... $12_{\eta-1}$ ausgebildet.

Solange die Fadenzugkraft in keinem der Abschnitte absolut bekannt ist, lässt sich allerdings die Fadenzugkraft auch sonst nirgends absolut bestimmen. Jedoch wenn alle, bezüglich der aufeinander folgenden Fadenabschnitte als Fadenzugkraft-Verhältnis bestimmten, Werte auf die (wenn auch unbekannte) Fadenzugkraft $F_1$ bezogen sind, können diese als Relativwerte, im Verhältnis zur Fadenzugkraft $F_1$ (ggf. in sogenannten "relativen Einheiten") angegeben werden. Die auf diese Weise gewonnene Zahlenfolge verkörpert somit ein Fadenzugkraft-Profil längs des in den Bereich 10 des Webfachs (allgemeiner Begriff ohne zeichnerische Darstellung) eingetragenen Fadens. Abweichungen bzw. Änderungen der Fadenzugkraft F zwischen den einzelnen Abschnitten werden bestimmbar. Eine ungleichmäßige Einarbeitung kann vorausgesehen werden.

Falls es gelingt, vor dem Austritt des Fadens 1 aus einer Hauptdüse 11 im Abschnitt $a_0$ mittels eines kombinierten Fadenzugkraft- und Geschwindigkeitsmessgerätes 13 die dort herrschende Fadenzugkraft $F_0$ und die zugeordnete Fadengeschwindigkeit $v_0$ absolut zu messen, kann im Rechenmodul 4 unter Verwendung des Signals vom Geschwindigkeitssensor 3, welches die Geschwindigkeit $v_1$ kennzeichnet, die Fadenzugkraft $F_1$ im Abschnitt $a_1$ sogar, nach Gleichung (II), absolut bestimmt werden.

In analoger Weise ist die Bestimmung der absoluten Fadenzugkraft $F_\eta$ in dem beliebigen Fadenabschnitt $a_\eta$ mit $F = F_\eta$ und $v = v_\eta$ vorzunehmen.

Die Geschwindigkeit $v_0$ kann auch innerhalb der Hauptdüse 11 gemessen werden, bevor der Faden 1 die Hauptdüse 11 verlässt.

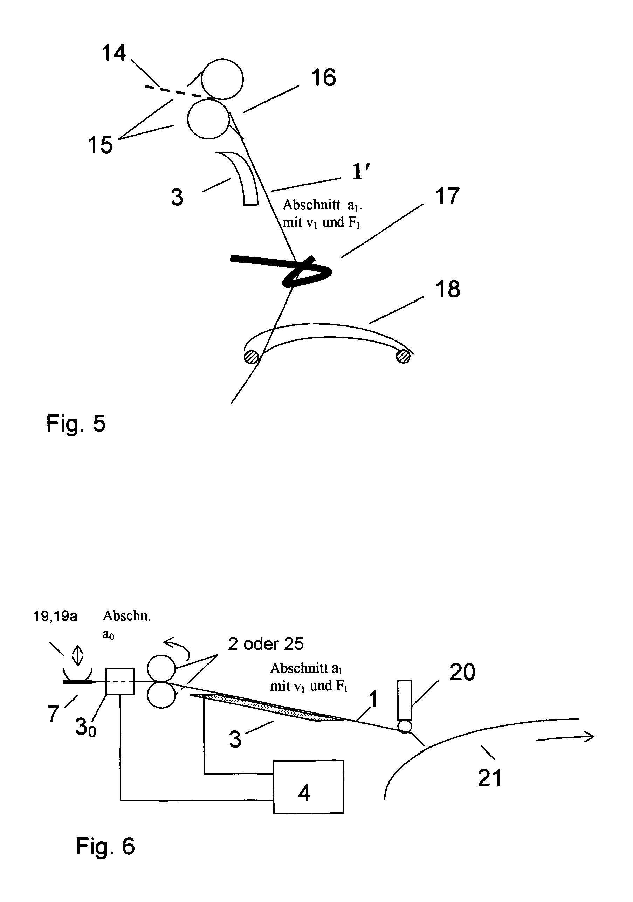

Figur 5 zeigt schematisch Teile einer Ringspinnmaschine mit der erfindungsgemäßen Anordnung. Ein noch nicht verfestigtes Faserband 14 in einem Streckwerk 15 verlässt dieses an der Stelle eines sogenannten Spinndreiecks 16. Der anschließend noch junge Faden 1 gelangt, nach einer Distanz, durch einen spiraligen Fadenführer 17 zu einer Zone, wo der Faden 1 ballonförmig im Kreis bewegt wird. Dabei gleitet er an einem Balloneinengungsring 18 (entspricht an sich einem Vollkreis und ist in Figur 5 nur zur Hälfte dargestellt) entlang. Erst durch die ballonförmige Kreisbewegung in Verbindung mit der nicht dargestellten Kombination Spinnring/Läufer wird der zunächst noch unfertige Faden 1' "verdrillt" und bekommt so seine gewohnte Festigkeit. Über die Distanz zwischen Streckwerk 15 und spiraligem Fadenführer 17 ist der Faden 1 fast nicht verdrillt (hat er fast keine Drehungen) und ist dadurch mechanisch äußerst instabil. Die Fadenzugkraft als eine prozessbestimmende Größe kann deshalb am noch ungedrehten Faden nicht berührend gemessen werden; und nach dem Fadenführer verhindert die ballonförmige Bewegung überhaupt die messtechnische Zugänglichkeit.

Erfindungsgemäß ist deshalb in der Nähe des Fadens der berührungslose Geschwindigkeitssensor 3 angeordnet. In einer zweckmäßigen Ausführungsform ist der Geschwindigkeitssensor 3 nach DE 199 00 581 B4 nach der Ortsfiltermethode ausgeführt und enthält als sensitiven Teil z.B. auch eine gekrümmte Fläche, an der der Faden 1 leicht anliegen würde und weswegen seine Bahn dann etwas gekrümmt verliefe. Mit dem Geschwindigkeitssensor 3 wird die Geschwindigkeit $v_1$ im Abschnitt $a_1$ erfasst. Das Streckwerk 15 wirkt als Fadenleitelement 2 und unterteilt den Faden 1 einerseits in den Abschnitt $a_0$ (in der Zeichnung nicht mit einem Bezugszeichen versehen) an der Stelle, wo das Faserband 14 das Streckwerk 15 gerade noch nicht verlassen hat, und den Abschnitt $a_1$ nach dem Streckwerk 15. Indem im Abschnitt $a_0$ die Geschwindigkeit $v_0$ als Liefergeschwindigkeit des Streckwerks 15 bekannt ist, und weil die Fadenzugkraft $F_0$ zum Ende des Streckwerks 15 durch die gegenseitige Reibung der Fasern im Faserband 14 fest charakterisiert (vorbestimmt) ist, kann die Fadenzugkraft $F_1$ im Faden 1 innerhalb des Abschnitts $a_1$ mittels der Gleichung (II), analog wie bezüglich Figur 3 erklärt, im Rechenmodul 4 bestimmt werden. Zumindest können mit den gegebenen Werten E, $A_0$ und $v_0$ durch eine Abschätzung der konstant bleibenden Fadenzugkraft $F_0$ Änderungen $\Delta F$ in der gesuchten Fadenzugkraft F mit einer praxisgerechten Genauigkeit quantifiziert werden.

Bei Verwendung der Anordnung in einer Ringspinnmaschine zur Bestimmung der Fadenzugkraft $F_1$ im Abschnitt $a_1$ nach dem ersten Fadenleitelement 2, in einem neu gebildeten, zunächst noch mit nur wenigen Drehungen versetzten Faden 1', ist als Fadenleitelement 2 ein Streckwerk 15 vorhanden. Dabei stimmt die Fadengeschwindigkeit $v_0$ mit der Liefergeschwindigkeit des Streckwerks 15 überein und die Fadenzugkraft $F_0$ ist durch die Rückhaltekraft des Streckwerks 15 bezüglich des vor einem Spinndreieck 16 noch vollständig ungedrehten Faserbandes 14 vorbestimmt.

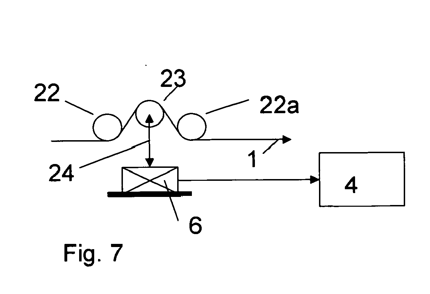

In Figur 6 ist schematisch dargestellt, wie die Fadenzugkraft in einer Rundstrickmaschine berührungslos gemessen wird. Der Faden 1, der von einer nicht dargestellten Spule abgezogen wird, passiert zunächst eine Fadenbremse 19, zur schematischen Erklärung enthaltend einen festen Untergrund 7 und eine in vertikaler Richtung nachgiebigen, deshalb bezüglich ihrer Andruckkraft einstellbaren Wange 19a. Die Fadenzugkraft $F_0$ ist von der Andruckkraft abhängig und wird somit im Abschnitt $a_0$ mittels dieser geregelten Fadenbremse 19 eingestellt; und mittels des berührend arbeitenden Zugkraftsensors $3_0$ wird sie gemessen. Dieser Zugkraftsensor $3_0$ ist beispielsweise analog zu dem bekannten, in Figur 7 dargestellten, mit Berührung arbeitenden Zugkraftsensor $3_0$ ausgebildet. Durch das Fadenleitelement 2, welches schematisch als in Pfeilrichtung drehendes Walzenpaar dargestellt ist, welches auch durch einen nicht dargestellten Foumisseur 25 ersetzt sein kann, ist die Geschwindigkeit $v_0$ des Fadens 1 im Abschnitt $a_0$ festgelegt. Der Faden 1 läuft anschließend über den Abschnitt $a_1$ und den Fadenführer 20 zu einer Nadelfontur 21. Im Abschnitt $a_1$ wird die Geschwindigkeit $v_1$ mittels des berührungslos arbeitenden Geschwindigkeitssensors 3 berührungslos gemessen. Die Signale der Geschwindigkeitssensoren $3_0$ und 3 werden dem Rechenmodul 4 zugeführt, in welchem die am Fadenleitelement (Walzenpaar) 2 eingestellte, und somit bekannte, Geschwindigkeit $v_0$ des Fadens 1, die garnbezogenen Werte E und $A_0$ sowie die Rechenvorschrift als Gleichung (II) bereits gespeichert sind. Mittels des Rechenmoduls 4 wird somit nach dem erfindungsgemäßen Verfahren der absolute Wert der Fadenzugkraft $F_1$ im Abschnitt $a_1$ bestimmt. Die Fadenzugkraft im Foumisseur 25 kann auch vom Wert 0 sein. In diesem Fall ist ein Zugkraftsensor $3_0$ nicht erforderlich.

Bei Verwendung der Anordnung in einer Rundstrickmaschine zur Bestimmung der Fadenzugkraft $F_1$, ist in dem einer Nadelfontur 21 zugeführten Faden 1 vor dem Fadenleitelement 2 ein Zugkraftsensor $3_0$ angeordnet. Ist das Fadenleitelement 2 als Foumisseur 25 ausgebildet, stimmt die Fadengeschwindigkeit $v_0$ mit der Liefergeschwindigkeit des Fournisseurs 25 überein und wahlweise wird die Fadenzugkraft $F_0$ vor dem oder im Foumisseur 25 als "0" angenommen.

Figur 7 zeigt das Prinzipschema eines allgemein bekannten berührend arbeitenden Fadenzugkraft-Sensors. Der Faden 1 wird von zwei festen Rollen 22 und 22a geführt und läuft zwischen diesen über eine vertikal bewegliche Rolle 23. Durch deren teilweise Umschlingung entsteht eine vertikal nach unten gerichtete Kraft auf die Rolle 23, die durch eine Stange 24 auf den Druckkraftsensor 6 übertragen wird. Der Druckkraftsensor 6 enthält einen Verformungskörper und Mittel zur Wandlung von dessen Verformung in ein Ausgangssignal. Die Druckkraft ist der Zugkraft F im Faden 1 proportional, und das Ausgangssignal des Druckkraftsensors 6 kann einem Rechenmodul 4 zugeführt werden.

Als berührungsloser Geschwindigkeitssensor 3, 3a....$3_\eta$ zur messtechnischen Erfassung einer Fadengeschwindigkeit v kann jeweils ein Sensor nach dem Laser-Interferenzverfahren, dem Laser-Doppler-Verfahren, vorzugsweise dem Ortsfilterverfahren oder nach einem Korrelationsverfahren verwendet werden.

**Bezugszeichenliste**

| | |
|---|---|
| 1,1' | Faden |
| 2, 2a... bis $2_{\eta-1}$ | Fadenleitelemente |
| $3_0$ | Fadenzugkraft-Sensor |
| 3, 3a... bis $3_\eta$ | Geschwindigkeitssensoren |
| 4 | Rechenmodul |
| 5 | Elektromagnet |
| 6 | Druckkraftsensor |
| 7 | fester Untergrund |
| 8 | Regler |
| 9 | Weblade |
| 10 | Bereich des Webfachs |
| 11 | Hauptdüse |
| 12, 12a ... bis $12_{\eta-1}$ | Stafettendüsen |
| 13 | kombiniertes Zugkraft- und Geschwindigkeitsmessgerät |
| 14 | Faserband |
| 15 | Streckwerk |
| 16 | Spinndreieck |
| 17 | spiraliger Fadenführer |
| 18 | Balloneinengungsring |
| 19 | Fadenbremse |
| 19a | Wange |
| 20 | Fadenführer |
| 21 | Nadelfontur |
| 22, 22a | feste Rollen |
| 23 | bewegliche Rolle |
| 24 | Stange |
| 25 | Fournisseur |
| $a_0$... bis $a_\eta$ | Abschnitte auf dem Faden |

**Patentansprüche**

1. Verfahren zur berührungslosen Bestimmung von Fadenzugkraft-Werten im Sinne einer Messung oder sonstigen Quantifizierung von Fadenzugkraft-Änderungen, unter bestimmten Bedingungen auch des Wertes der absoluten Fadenzugkraft selbst, unter Verwendung von Abschnitte des Fadens begrenzenden Fadenleitelementen, **dadurch gekennzeichnet, dass**

a) in einen Rechenmodul (4) garnbezogene Werte sowie eine Rechenvorschrift zur Berechnung eines Fadenzugkraft-Wertes aus Messwerten, Sensorsignalen oder vorbestimmten Werten unter Verwendung dieser garnbezogenen Werte eingegeben werden, dass

b) als Messwerte, Sensorsignale oder vorbestimmte Werte Fadengeschwindigkeiten (v) von jeweils zwei be-nachbarten Abschnitten ($a_\mu$, $a_{\mu+1}$) und wahlweise die Fadenzugkraft im Fadenabschnitt ($a_\mu$) vor dem Faden-leitelement in den Rechenmodul (4) eingegeben werden, dass

c) im Rechenmodul (4) ein Fadenzugkraft-Wert für den Abschnitt ($a_{\mu+1}$) entsprechend der Rechenvorschrift berechnet wird, und dass

d) der Fadenzugkraft-Wert zahlenmäßig zur Anzeige gebracht oder in der Form eines Signals einer Weiterverarbeitung zugeführt wird.

2. Verfahren nach Anspruch 1, **dadurch gekennzeichnet, dass** die Fadengeschwindigkeit (v) zweier benachbarter Abschnitte ($a_\mu$, $a_{\mu+1}$) in mindestens einem Abschnitt berührungslos messtechnisch erfasst wird.

3. Verfahren nach Anspruch 1 oder 2, **dadurch gekennzeichnet, dass** die garnbezogenen Werte der Elastizitätsmodul (E) des Garnes und der Garmquerschnitt ($A_0$) sind.

4. Verfahren nach Anspruch 1, 2 oder 3,
**dadurch gekennzeichnet, dass** die Rechenvorschrift lautet:

$$F_{\mu+1} = \frac{v_\mu}{v_{\mu+1}} F_\mu + EA_0 \left(1 - \frac{v_\mu}{v_{\mu+1}}\right) \qquad (II)$$

5. Verfahren nach Anspruch 4, **dadurch gekennzeichnet, dass** die Fadenzugkraft ($F_\mu$) vor einem der Fadenleitele-mente (2, 2a ...$2_{\eta-1}$) gegeben oder anderweitig bekannt und im Rechenmodul (4) bereits eingegeben und gespeichert ist oder dort eingegeben und gespeichert wird und dass als Fadenzugkraft-Wert die absolute Fadenzugkraft ($F_{\mu+1}$) nach dem entsprechenden Fadenleitelement (2 oder 2a ...$2_{\eta-1}$) berechnet wird.

6. Verfahren nach Anspruch 4, **dadurch gekennzeichnet, dass** die Fadengeschwindigkeit ($v_\mu$) vor einem der Fa-denleitelemente (2, 2a ...$2_{\eta-1}$) gegeben oder anderweitig bekannt und im Rechenmodul (4) bereits eingegeben und gespeichert ist.

7. Verfahren nach Anspruch 1, 2 oder 3, **dadurch gekennzeichnet, dass** als Fadenzugkraft-Wert ein Fadenzugkraft-Verhältnis $F_{\mu+1} / F_\mu$ oder dessen Kehrwert berechnet wird.

8. Verfahren nach einem der Ansprüche 1 bis 6, **dadurch gekennzeichnet, dass** mittels des Rechenmoduls (4) als Fadenzugkraft-Wert der Zugkraftunterschied (ΔF) zu einem bereits vorher bestimmten Fadenzugkraft-Wert bestimmt wird.

9. Verfahren nach einem der Ansprüche 1 bis 8, **dadurch gekennzeichnet, dass** durch zyklisches Weiterrücken der an ein Fadenleitelement (2, 2a ...$2_{\eta-1}$) angrenzenden beiden Abschnitte ($a_\mu$, $a_{\mu+1}$) des Fadens (1), jeweils von einem Fadenleitelement (2, 2a ...$2_{\eta-1}$) zum nächsten, mittels iterativer Berechnung eine Folge von Fadenzugkraft-Werten ($F_1$ ... bis $F_\eta$) berechnet wird, die wahlweise auch als Fadenzugkraft-Profil grafisch darstellbar ist.

10. Anordnung zur berührungslosen Bestimmung von Fadenzugkraft-Werten unter Verwendung von Fadenleitelementen, **dadurch gekennzeichnet, dass** in Laufrichtung eines Fadens (1) mindestens vor dem oder im ersten Fadenleitelement (2) ein mit einem Rechenmodul (4) verbundener Fadenzugkraft-Sensor ($3_0$) oder ein mit dem Rechenmodul (4) verbundenes kombiniertes Fadenzugkraft- und Geschwindigkeitsmessgerät (13) oder ein die Fadenzugkraft vorbestimmendes Funktionselement wahlweise angeordnet ist und dass mindestens nach einem Fadenleit-element (2, 2a ...$2_{\eta-1}$) in der Nähe des Fadens (1) je ein Geschwindigkeitssensor (3, 3a... $3_\eta$) zur berührungslosen messtechnischen Erfassung der Fadengeschwindigkeit ($v_\mu$, $v_{\mu+1}$) angeordnet ist und dass jeder vorhandene Ge-schwindigkeitssensor (3, 3a... $3_\eta$) mit dem Rechenmodul (4) verbunden ist.

11. Anordnung zur berührungslosen Bestimmung von Fadenzugkraft-Werten unter Verwendung von Fadenleitelementen zur Durchführung des Verfahrens nach einem der Ansprüche 5 bis 8, **dadurch gekennzeichnet, dass** in Laufrichtung eines Fadens (1) mindestens nach einem Fadenleitelement (2, 2a ...$2_{\eta-1}$) in der Nähe des Fadens (1) je ein Geschwindigkeitssensor (3, 3a...$3_\eta$) zur berührungslosen messtechnischen Erfassung der Fadengeschwindigkeit ($v_\mu$, $v_{\mu+1}$) angeordnet ist und dass jeder vorhandene Geschwindigkeitssensor (3, 3a...$3_\eta$) mit dem Rechenmodul (4) verbunden ist.

12. Anordnung nach Anspruch 10 oder 11, **gekennzeichnet durch** die Verwendung in einer Luftdüsenwebmaschine zur Bestimmung von Fadenzugkraft-Werten oder eines Fadenzugkraft-Profils an dem in einem Bereich (10) des Webfachs eingetragenen Faden (1), wobei innerhalb der Webbreite die Fadenleitelemente (2, 2a ... $2_{\eta-1}$) als Stafettendüsen (12, 12a ... $12_{\eta-1}$) ausgebildet sind.

13. Anordnung nach Anspruch 10 oder 11, **gekennzeichnet durch** die Verwendung in einer Ringspinnmaschine zur Bestimmung der Fadenzugkraft ($F_1$) in einem neu gebildeten, zunächst noch mit nur wenigen Drehungen versetzten Faden (1'), wobei als Fadenleitelement (2) ein Streckwerk (15) vorhanden ist und bei der die Fadengeschwindigkeit ($v_0$) mit der Liefergeschwindigkeit des Streckwerks (15) übereinstimmt und bei der die Fadenzugkraft ($F_0$) **durch** die Rückhaltekraft des Streckwerks (15) bezüglich des vor einem Spinndreieck (16) noch vollständig ungedrehten Faserbandes (14) vorbestimmt ist.

14. Anordnung nach Anspruch 10 oder 11, **gekennzeichnet durch** die Verwendung in einer Rundstrickmaschine zur Bestimmung der Fadenzugkraft ($F_1$), wobei in dem einer Nadelfontur (21) zugeführten Faden (1) vor dem Fadenleitelement (2) ein Fadenzugkraft-Sensor ($3_0$) angeordnet ist oder bei der das Fadenleitelement (2) als Fournisseur (25) ausgebildet ist, bei dem die Fadengeschwindigkeit ($v_0$) mit der Liefergeschwindigkeit des Fournisseurs (25) übereinstimmt und bei der wahlweise die Fadenzugkraft ($F_0$) vor dem oder im Foumisseur (25) als "0" angenommen wird.

15. Anordnung nach einem der Ansprüche 10 bis 14, **dadurch gekennzeichnet, dass** als berührungsloser Geschwindigkeitssensor (3, 3a....$3_\eta$) zur messtechnischen Erfassung einer Fadengeschwindigkeit (v) jeweils ein Sensor nach dem Laser-Interferenzverfahren, dem Laser-Doppler-Verfahren, vorzugsweise dem Ortsfilterverfahren oder nach einem Korrelationsverfahren verwendet wird.

Abschnitt $a_1$
$v_1, F_1, A_1$

Abschnitt $a_2$
$v_2, F_2, A_2$

1

2

3

3a

4

zur Anzeige
oder Weiterverarbeitung

Fig. 1

Abschnitt $a_1$
$v_1, F_1, A_1$

Abschnitt $a_2$
$v_2, F_2, A_2$

Abschnitt $a_3$
$v_3, F_3, A_3$

Abschnitt $a_n$
$v_n, F_n, A_n$

1

$2_{n-1}$

$3_n$

3

2

3a

2a

3b

4

zur Anzeige
oder Weiterverarbeitung

Fig. 2

12

EP 2 266 908 A2

Abschnitt $a_1$
mit $v_1$ und $F_1$

1

5

2

3

6

7

4

8

Fig. 3

13    11    10

$a_0$    $a_1$    $a_2$    $a_n$

3    12    3a    12a    3η

12

4

Fig. 4

13

14 ——

16 ——

15 ——

3

**1′**

Abschnitt $a_1$.
mit $v_1$ und $F_1$

17 ——

18 ——

## Fig. 5

19,19a   Abschn.
         $a_0$

2 oder 25

Abschnitt $a_1$
mit $v_1$ und $F_1$

20 ——

7   3$_0$

3

4

1

21

## Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4400037 C2
- DE 102005038047 B4
- EP 0753088 B1
- EP 1473390 A2
- DE 19900581 A1
- EP 1953282 A1
- WO 2008012093 A
- DE 19900581 B4